# EUROPEAN PATENT SPECIFICATION

(11) **EP 3 390 577 B1**
(45) Date of publication and mention of the grant of the patent: **26.02.2020**
(21) Application number: 16822425.1
(22) Date of filing: 15.12.2016
(51) Int. Cl.: C10G 1/10, C10B 49/02, C10B 57/18

(54) **PROCESS FOR CONVERTING WASTE PLASTIC INTO LIQUID GASES, FUELS, AND WAXES BY CATALYTIC CRACKING**
VERFAHREN ZUR UMWANDLUNG VON KUNSTSTOFFABFÄLLEN IN FLÜSSIGE GASE, BRENNSTOFFE UND WACHSE DURCH KATALYTISCHES KRACKEN
TRANSFORMATION DE DÉCHETS DE MATIÈRES PLASTIQUES EN GAZ LIQUIDES, CARBURANTS ET CIRES PAR CRAQUAGE CATALYTIQUE

(30) Priority: 18.12.2015 EP 15201135
(43) Date of publication of application: 24.10.2018
(73) Proprietor: SOLVAY SA, 1120 Bruxelles (BE)
(72) Inventor: STREIFF, Stéphane, Shanghai (CN); PICCININI, Marco, 1120 Brussels (BE); CORMA, Avelino, 46020 Valencia (ES); CERRO-ALARCÓN, Miriam, 46020 Valencia (ES); MENGUAL, Jesús, 46740 Carcaixent (ES)
(74) Representative: Delenne, Marc
(86) International application number: PCT/EP2016/081295
(87) International publication number: WO 2017/103010

(56) References cited:
- WO-A2-2009/095888
- US-A- 5 364 995
- US-A- 5 481 052
- US-A- 5 753 086
- US-A1- 2005 131 260
- US-A1- 2014 027 265

## Description

The present invention relates to a process for converting waste plastic into gases, liquid fuels and waxes by catalytic cracking. The process comprises the steps of introducing waste plastic and a catalyst within a reactor; allowing at least a portion of the waste plastic to be converted to gases, liquid fuels, and waxes within the reactor; and removing a product stream containing said gases, liquid fuels and waxes from the reactor.

In view of the increasing importance of polymers as substitutes for conventional materials of construction, such as glass, metal, paper, and wood, the perceived need to save non-renewable resources such as petroleum and dwindling amounts of landfill capacity available for the disposal of waste products, considerable attention has been devoted in recent years to the problem of recovering, reclaiming, recycling or in some way reusing waste plastic.

It has been proposed to pyrolize or catalytically crack the waste plastic so as to convert high molecular weight polymers into volatile compounds having a much lower molecular weight. The volatile compounds, depending on the process employed, can be either relatively high boiling liquid hydrocarbons useful as fuel oils or fuel oil supplements or light to medium boiling hydrocarbons useful as gasoline-type fuels or as other chemicals.

Catalytic cracking of mixed waste plastic is a process well known to the person skilled in the art. For example, US 5,216,149 discloses a method for controlling the pyrolysis of a complex waste stream of plastics to convert such stream into useful high-value monomers or other chemicals, by identifying catalyst and temperature conditions that permit decomposition of a given polymer in the presence of others, without substantial decomposition of the other polymers. US 5 364 995 discloses a process for plastic cracking.

During catalytic cracking, five main families of products are produced : gases, gasoline fraction, kerosene fraction, diesel fraction and waxy compounds. While the latter four may all find existing market applications, the valorization of the former (gases) is harder. This often leads to the utilization of such "off-gas" for energy recovery directly on the production site. For example, US 5,811,606 discloses a method of treating waste hydrocarbon plastics wherein non-condensable components C₁-C₄ generated from the catalytic cracking in the reactor are collected and sent into the heating furnace to be burnt. Also WO 00/64997 and WO 02/057391 disclose that gaseous hydrocarbon substances are used to heat the thermal cracking reactor.

Further, WO 2012/076890 describes that light hydrocarbons obtained from a hydrocracking reaction chamber can be reintroduced into a dechlorination reaction chamber to act as a hydrogen source for a dechlorination reaction. The authors further disclose that in a process for recycling waste plastic materials optionally non-hydrocracked or partially hydrocracked feedstock from the hydrocracking reaction chamber can be reintroduced into the hydrocracking cracking reactor chamber. However, WO 2012/076890 does not disclose a method for valorization of gases.

In general, it is of advantage to increase the kerosene and diesel fraction since these are valuable products. Further, the quality of diesel fraction obtained should be high, i.e. it should contain a low amount of aromatics.

In the catalytic cracking of waste plastic, high molecular weight polymers are cracked into smaller molecules of lighter weight. In theory, the end product of such cracking reaction mainly consists of gases comprising light weight hydrocarbons. Therefore, a priori, low molecular weight hydrocarbons should not readily react under cracking conditions. If at all, light weight hydrocarbons should undergo reactions which would transform them into even lighter compounds. The present inventors now surprisingly found that contrary to these expectations light weight hydrocarbons being introduced within a reactor for cracking waste plastic are transformed into heavier products thereby increasing the amounts of valuable kerosene and diesel fractions. It was furthermore found that even the undesired gases in the product stream obtained from such cracking reactor can be recycled into the process thereby even further increasing the kerosene and diesel fractions. Additionally, it was found that the additional introduction of light weight hydrocarbons within the cracking reactor yields diesel fractions of higher quality with respect to a decreased amount of aromatics obtained.

The present invention therefore relates to a process as defined in claim 1.

The gas stream introduced within the reactor according to claim 1 may comprise other gases, such as carbon oxide and/or carbon monoxide.

In a preferred embodiment of the process according to the invention the gas stream being additionally introduced within the reactor contains or consists of the gases obtained as "off-gases" from the product stream. Most preferably, the gas stream consists of the off-gases from the product stream. The off-gases may be partly of completely recycled within the process of the present invention.

The gas stream comprising propylene can be introduced within the reactor prior to, simultaneously with or after the waste plastic.

In the catalytic cracking of plastic several fractions of chemical compounds are obtained. Usually, there is a gas fraction sometimes also referred to as "gases" or "off-gases" containing light weight chemical compounds with less than 5 carbon atoms. The gasoline fraction contains compounds having a low boiling point of for example below 216°C. This fraction includes compounds having 5 to 11 carbon atoms. The kerosene and diesel fraction has a higher boiling point of for example 216°C to 359°C. This fraction generally contains compounds having 12 to 21 carbon atoms. The even higher boiling fraction is generally designated as wax (Heavy Cycle Oil or HCO). In all the fractions, the compounds are hydrocarbons which optionally comprise heteroatoms, such as N, O, etc. "Liquid fuels" in the sense of the present invention therefore are fuels like gasoline and diesel but may also be used as other valuable chemicals or solvents. "Waxes" designate such hydrocarbons which are solid at room temperature (23°C) and have a softening point of generally above 45°C.

A plastic is mostly constituted of a particular polymer and the plastic is generally named by this particular polymer. Preferably, a plastic contains more than 25 % by weight of its total weight of the particular polymer, preferably more than 40 % by weight and more preferably more than 50 % by weight. Other components in plastic are for example additives, such as fillers, reinforcers, processing aids, plasticizers, pigments, light stabilizers, lubricants, impact modifiers, antistatic agents, inks, antioxidants, etc. Generally, a plastic comprises more than one additive.

Plastics used in the process of the present invention preferably are polyolefins and polystyrene, such as high density polyethylene (HDPE), low density polyethylene (LDPE), polypropylene (PP) and polystyrene (PS).

Other plastics, such as polyvinylchloride, polyvinylidene chloride, polyethylene terephthalate, polyurethane (PU), acrylonitrile-butadiene-styrene (ABS), nylon and fluorinated polymers are less desirable. If present in the waste plastic, they are preferably present in a minor amount of less than 50 % by weight, preferably less than 30 % by weight, more preferably less than 20 % by weight, even more preferably less than 10 % by weight of the total weight of the dry waste plastic. Preferably, the individual content of any less desirable plastic is less than 5 % by weight, more preferably less than 2 % by weight based on the total weight of the dry waste plastic.

Preferably, the plastics waste starting material comprises one or more thermoplastic polymers and is essentially free of thermosetting polymers. Essentially free in this regard is intended to denote a content of thermosetting polymers of less than 15, preferably less than 10 and even more preferably less than 5 wt % of the composition.

The waste plastic used in the process of the invention may be a single plastic or a mixture of two or more different plastics (mixed waste plastic). Mixed waste plastic being preferred.

Usually, waste plastic contains other non-desired components, namely foreign material, such as paper, glass, stone, metal, etc.

In the context of the present invention whenever it is referred to the weight of the waste plastic or the weight of the polystyrene and polyolefin in the waste plastic, this weight relates to the weight of the dry plastic without any foreign material being admixed with the plastic. However, the weight includes any components in the plastic, such as the above described additives.

The present inventors found that, when a gas stream comprising light weight hydrocarbons is introduced within the reactor, surprisingly the production of valuable products, particularly kerosene and diesel fractions, is increased. This finding is particularly unexpected as such stream should not readily react under cracking conditions. If at all, such gas should undergo reactions which would transform it into even lighter compounds. However, the inventors surprisingly found that, under plastic depolymerization reaction conditions, light hydrocarbons and in particular off-gases are instead transformed into heavier products.

It was furthermore found that in the process of the present invention the diesel quality is improved with respect to an increased concentration of saturated compounds and a decreased concentration of unsaturated compounds, in particular aromatic compounds. At the same time, the also obtained gasoline fraction maintains its high level of quality with respect to Research Octane Number (RON) and Motor Octane Number (MON).

The catalyst used in the process of the present invention may comprise a zeolite-type catalyst. In one embodiment, the catalyst predominantly is a zeolite-type catalyst. In a further embodiment, the catalyst consists of a zeolite-type catalyst. In a third embodiment, the catalyst additionally comprises a further catalyst, in particular an amorphous-type catalyst.

The catalyst used in the process of the present invention may comprise an amorphous-type catalyst. In one embodiment, the catalyst predominantly is an amorphous-type catalyst. In a further embodiment, the catalyst consists of an amorphous-type catalyst. In a third embodiment, the catalyst additionally comprises a further catalyst, in particular a zeolite-type catalyst.

The embodiment in which the catalyst predominantly is a zeolite-type catalyst is preferred. In this context, the term "predominantly" defines a catalyst which is a mixture of a zeolite-type catalyst and a non-zeolite-type catalyst, such as an amorphous catalyst, but wherein the catalyst comprises more than 50 % by weight of the zeolite-type catalyst based on the total weight of the catalyst. Preferably, the catalyst comprises more than 60 %, more preferably more than 70 %, even more preferably more than 80 % and most preferably more than 90 % of the zeolite-type catalyst. The catalyst can comprise a single zeolite-type catalyst or a mixture of two or more zeolite-type catalysts.

As catalyst all types of FCC catalysts including equilibrated and spent ones may be used. FCC catalysts are well known to the person skilled in the art. For example, the zeolite-type catalyst may be selected from crystalline microporous zeolites which are known to the person skilled in the art and which are commercially available. Preferred examples for zeolite-type catalysts are described in WO 2010/135273, the content of which is incorporated herein by reference. Specific examples for suitable zeolite-type catalysts include but are not limited to ZSM-5, ZSM-11, ZSM-22, ZSM-23, ZSM-35, ZSM-48, ZSM-50, TS-1, TS-2, SSZ-46, MCM-22, MCM-49, FU-9, PSH-3, ITQ-1, EU-1, NU-10, silicalite-1, silicalite-2, boralite-C, boralite-D, BCA, and mixtures thereof.

If the catalyst comprises an amorphous-type catalyst, this may comprise silica, alumina, kaolin, or a mixture thereof. Silica, in particular in the form of sand, is a well known for FCC catalytic applications. Preferred amorphous-type catalysts comprise at least 60 % by weight, preferably at least 70 % by weight and even more preferably at least 80 % by weight of silica-equivalent of an oxidic compound based on silicon like silica (SiO2), kaolin, etc.

The catalyst can be fresh catalyst, equilibrated catalyst (such as spent catalyst), or a mixture thereof.

The waste plastic and the catalyst can be introduced within the reactor simultaneously or subsequently. Furthermore, the mixed waste plastic and the catalyst can be introduced within the reactor batchwise or continuously.

Additionally, the inventors found that the introduction of the gas stream within the cracking reactor opens up new possibilities for the choice of the catalyst for the catalytic cracking reaction. For example, while zeolite-type catalysts and in particular ZSM-5-type catalysts are well known in FCC technology to increase the octane number of the gasoline produced, they have the drawback of leading to higher production of light olefins/gases, which in the prior art were not fully valorized in the plastic catalytic cracking process. Due to the possibility of recycling such gases to the reactor, the present invention makes the appealing addition of for example ZSM-5 now possible.

Finally, the inventors found that the introduction of the gas stream within the cracking reactor and in particular the recycling of off-gases is not detrimental for the reaction kinetics. It was found that the overall conversion is not affected.

The skilled person is aware of suitable apparatus and equipment for carrying out the process in accordance with the present invention and will select the suitable system based on his professional experience, so that no further extensive details need to be given here. However, without willing to be bound to theory, some examples of reactor technologies that can be effectively used to carry out the invention comprise the stirred reactor, the rotary kiln, the bubbling fluidized bed reactor and the circulating fluidized bed reactor riser or downer. The rotary kiln is a cylindrical vessel, inclined slightly to the horizontal, which is rotated slowly about its axis. The material to be processed is fed into the upper end of the cylinder. As the kiln rotates, material gradually moves down towards the lower end, and may undergo a certain amount of stirring and mixing. In a bubbling fluidized bed reactor a fluid (gas or liquid) is passed through the catalyst particles at high enough velocities to suspend the catalyst and cause it to behave as though it were a fluid. In a circulating fluidized bed, also called transport reactor, the catalyst and the fluid flow co-currently at high speed. Generally a cyclone system is used to separate the fluid, which can undergo downstream processing, from the solid, which is recirculated to the reactor. These reactors can be either upflow for risers, or downflow for downers.

Preferably, they are introduced continuously. In one embodiment, the whole process is conducted continuously.

In the reactor, in presence of the catalyst, at least a portion of the mixed waste plastic is converted to gases, liquid fuels and waxes. This conversion preferably takes place at an elevated temperature of for example above 350°C, preferably above 400°C, more preferably above 410°C. Suitably, the conversion takes place at a temperature in the range of above 410°C to 500°C, more preferably in the range of from 420°C to 450°C, such as about 425°C.

The effect of introducing the gas stream within the reactor is now explained in more detail with reference to the following examples and the attached figures which show in
Figure 1 the evolution with time of the cumulative conversion with and without a propylene gas stream,
Figure 2 the effect of a propylene gas stream on selectivity,
Figure 3 the effect of a propylene gas stream on the quality of the gasoline fraction, and
Figure 4 the effect of a propylene gas stream on the quality of the diesel fraction.

In the Figures, in (a) the results of Comparative Example 1 and Example 2, in (b) the results of Comparative Example 3 and Example 4, and in (c) the results of Comparative Example 5 and Example 6 are compared.

The examples below were conducted according to the following general experimental procedure :

In each catalytic run in semibatch mode, 30 g of plastic (20 % Polypropylene, 80 % Polyethylene) were loaded inside the reactor and a defined amount of catalyst were stored in the catalyst storage tank. The reactor was closed and heated from room temperature to 200°C during 20 minutes, while simultaneously purging with a 150 mL/min nitrogen flow. When the internal temperature reached the melting point of the plastic, stirring was started and slowly increased to 690 rpm. The temperature was held at 200°C for 25-30 minutes. During this heating process, nitrogen coming out from the reactor was not collected. Meanwhile, the catalyst storage tank containing the catalyst was purged with nitrogen several times.

After this first pretreatment step and only in those experiments where propylene (C₃=) was fed, the flow of nitrogen was decreased from 150 to 103 mL/min and 38 mL/min of propylene are introduced inside the reactor. The flows were allowed to stabilize for several minutes after which the mixture of gases (C₃=/N₂) was collected in a gas sampling bag for 3 minutes. After this collection of gases, the temperature control set point was changed from external to internal, the internal temperature was increased to the reaction temperature at a heating rate of 10°C/min, and the collection of gases and nitrogen (and C₃= if fed) in the corresponding gas sampling bag was started. When the internal temperature reached the reaction temperature, the catalyst was introduced inside the reactor, and the circulation of the gaseous products was commuted to another pair of glass traps and corresponding gas sampling bag. This was considered as the zero reaction time.

During selected time periods, liquid and gaseous products were collected in a pair of glass traps and their associated gas sampling bag, respectively. At the end of the experiment, the flow of propylene (if fed) was stopped and the reactor was cooled to room temperature. During this cooling step, liquids and gases were also collected.

The reaction products were classified into 3 groups : i) gases, ii) liquid hydrocarbons and iii) residue (waxy compounds, ashes and coke accumulated on the catalyst). Quantification of the gases was done by gas chromatography (GC) using nitrogen as the internal standard, while quantification of liquids and residue was done by weight. Glass traps (along with their corresponding caps) were weighed before and after the collection of liquids, while the reactor vessel was weighed before and after each run. For determination of conversion, yields to the different products and composition of gases, the concentration of fed C₃= (determined by GC of the first gas sampling bag) was subtracted.

The simulated distillation (SIM-DIS) GC method allowed determination of the different fractions in the liquid samples (according to the selected cuts), the detailed hydrocarbon analysis (DHA) GC method allowed determination of the PIONAU components in the gasoline fraction of the last withdrawn sample (C5-C11 : Boiling point < 216.1°C; what included C5-C6 in the gas sample and C5-C11 in the liquid samples), and GCxGC allowed the determination of saturates, mono-, di- and tri-aromatics in the diesel fraction of the last withdrawn liquid samples (C12-C21; 216.1 < BP < 359°C).

### Comparative Example 1

The experiment was carried out following the general procedure described above. In this example, 20 g of an equilibrated FCC (Fluidized Catalytic Cracking) catalyst ECAT-1C, calcined at 550°C to remove possible hydrocarbon adsorbed, was used. Reaction temperature was set at 425°C. Propylene was not fed during the reaction. In the attached figures this example is labeled as ECAT-1C.

### Example 2

The experiment was carried out following the general procedure described above. In this example, 20 g of an equilibrated FCC (Fluidized Catalytic Cracking) catalyst ECAT-1C, calcined at 550°C to remove possible hydrocarbon adsorbed, was used. Reaction temperature was set at 425°C. Propylene was fed during the reaction. In the attached figures this example is labeled as ECAT-1C + C₃=.

### Comparative Example 3

The experiment was carried out following the general procedure described above. In this example, 20 g of an equilibrated FCC (Fluidized Catalytic Cracking) catalyst, calcined at 550°C to remove possible hydrocarbon adsorbed, was used. This catalyst was obtained by impregnation of ECAT- 1C with a Ga(NO₃)₃ aqueous solution followed by calcination at 550°C. The amount of Ga(NO₃)₃ used was calculated in order to obtain 2 wt % Gallium in the final catalyst. Reaction temperature was set at 425°C. Propylene was not fed during the reaction. In the attached figures this example is labeled as 2 % Ga-ECAT-1C.

### Example 4

The experiment was carried out following the general procedure described above. In this example, 20 g of an equilibrated FCC (Fluidized Catalytic Cracking) catalyst, calcined at 550°C to remove possible hydrocarbon adsorbed, was used. This catalyst was obtained by impregnation of ECAT-1C with a Ga(NO₃)₃ aqueous solution followed by calcination at 550°C. The catalyst contained 2 wt % Gallium. Reaction temperature was set at 425°C. Propylene was fed during the reaction. In the attached figures this example is labeled as 2 % Ga-ECAT-1C + C3=.

### Comparative Example 5

The experiment was carried out following the general procedure described above. In this example, 20 g of a 92/8 (wt/wt) mixture of an equilibrated FCC (Fluidized Catalytic Cracking) catalyst ECAT-1C and a ZSM-5 based catalyst was used. The ZSM-5 based catalyst was prepared by impregnation of a ZSM-5 catalyst with a Ga(NO₃)₃ aqueous solution followed by calcination at 550°C. The ZSM-5 based catalyst component contained 3.1 wt % Gallium. The equilibrated catalyst was calcined at 550°C to remove possible hydrocarbon adsorbed. Reaction temperature was set at 425°C. Propylene was not fed during the reaction. In the attached figures this example is labeled as ECAT-1C + 4 % Ga CBV5020.

### Example 6

The experiment was carried out following the general procedure described above. In this example, 20 g of a 92/8 (wt/wt) mixture of an equilibrated FCC (Fluidized Catalytic Cracking) catalyst ECAT-1C and a ZSM-5 based catalyst was used. The ZSM-5 based catalyst was prepared by impregnation of a ZSM-5 catalyst with a Ga(NO₃)₃ aqueous solution followed by calcination at 550°C. The ZSM-5 based catalyst component contained 3.1 wt % Gallium. The equilibrated catalyst was calcined at 550°C to remove possible hydrocarbon adsorbed. Reaction temperature was set at 425°C. Propylene was fed during the reaction. In the attached figures this example is labeled as ECAT-1C + 4 % Ga CBV5020 +C₃=.

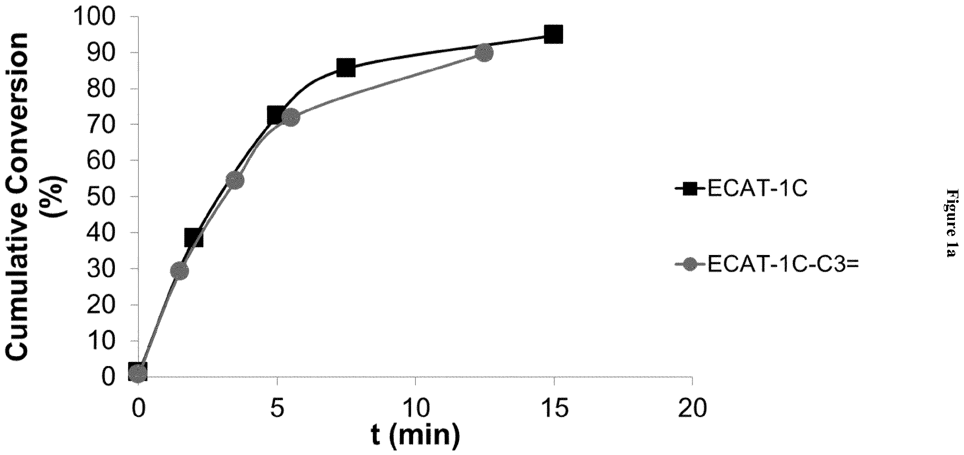

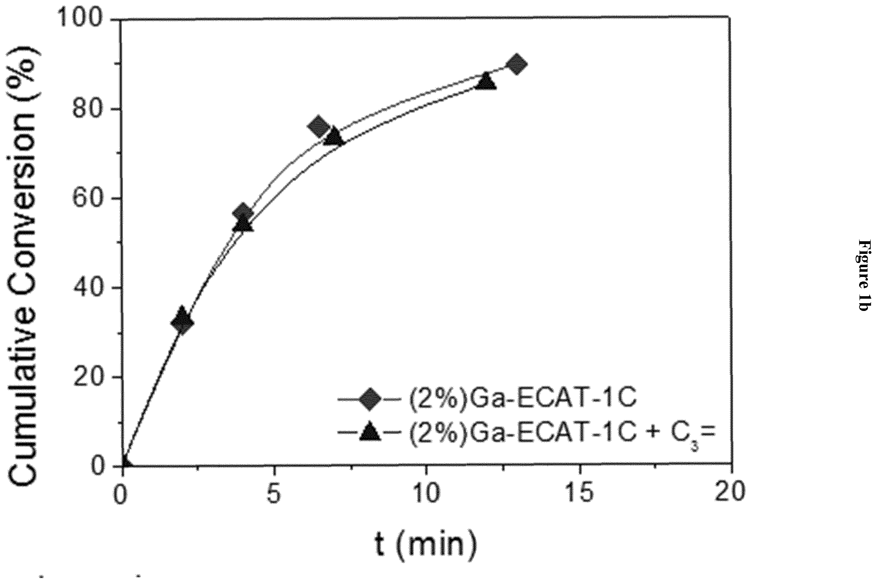

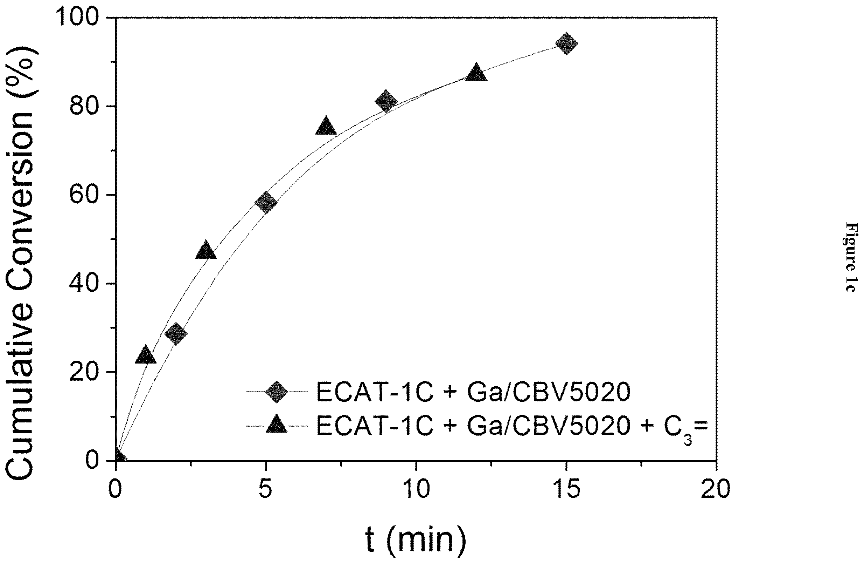

Figure 1 shows the cumulative conversion of the plastic waste as function of reaction time. It is evident that the conversion is not affected by the additional gas stream.

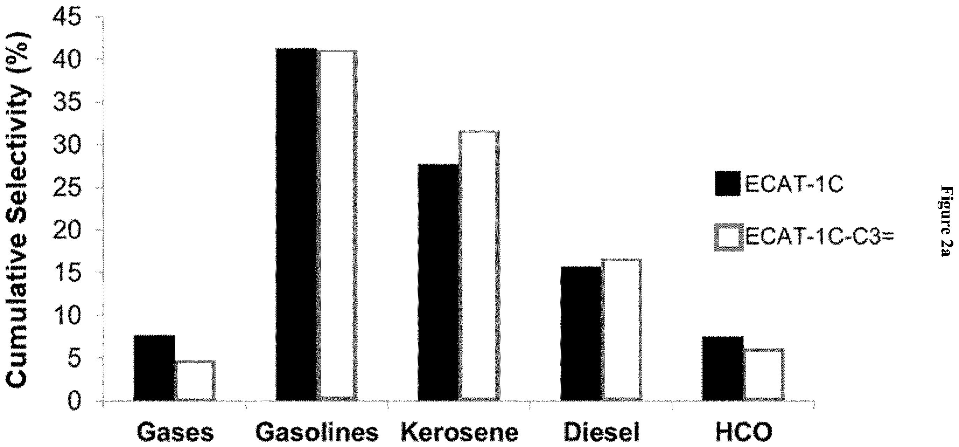

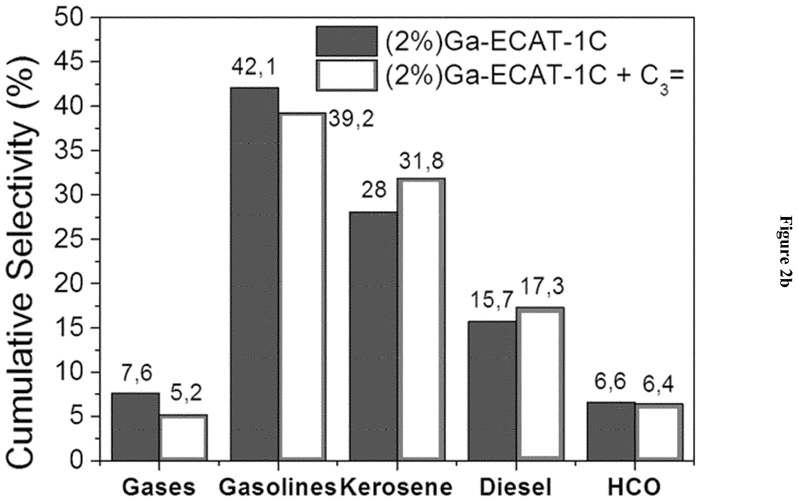

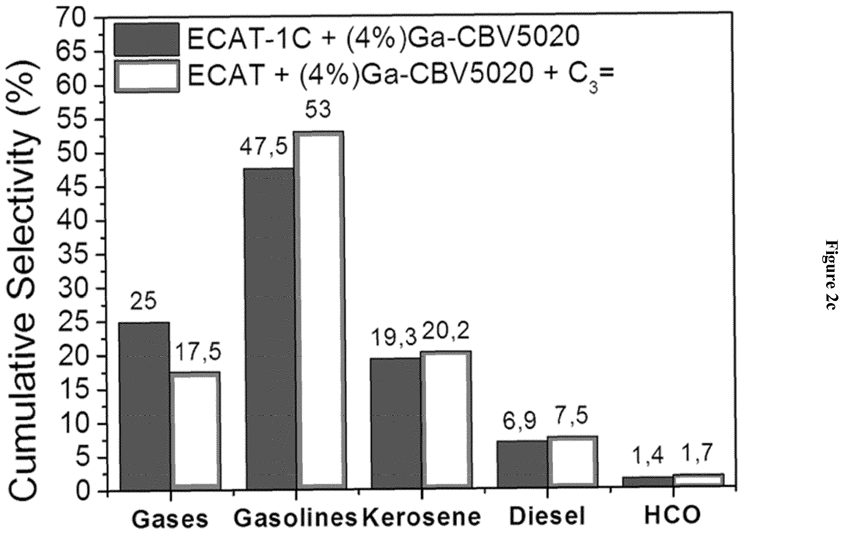

The effect of the additional gas stream on the selectivity of the process is shown in Figure 2. It is evident that the selectivity for gases decreases while the selectivity for diesel and kerosene increases.

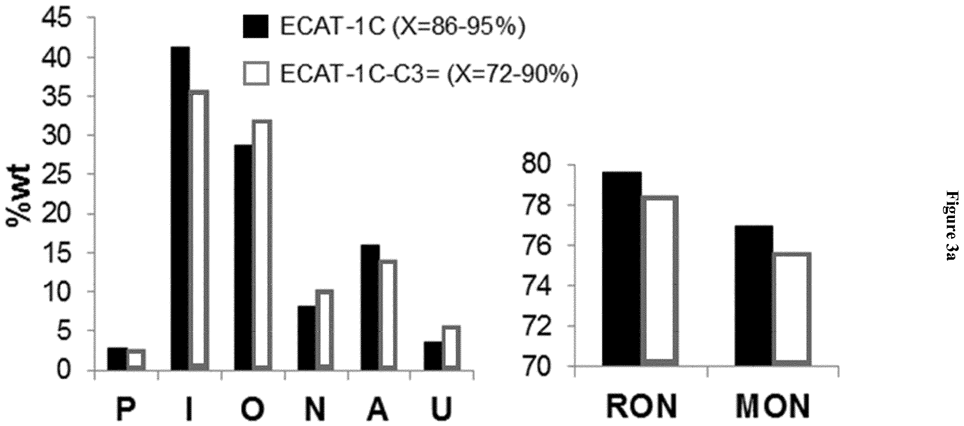

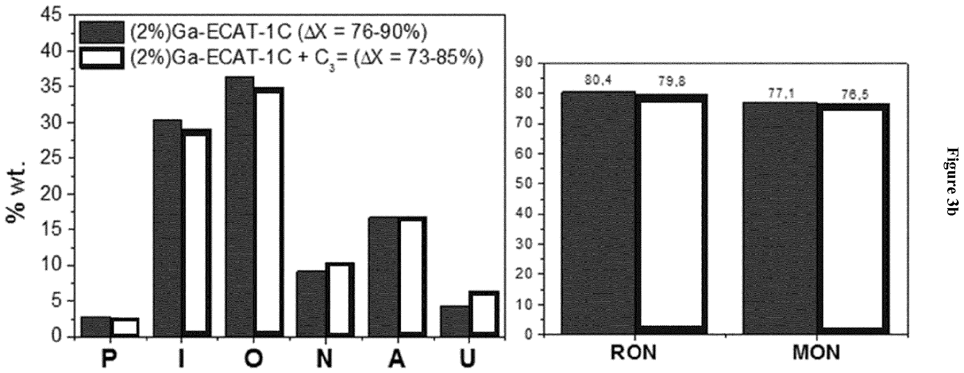

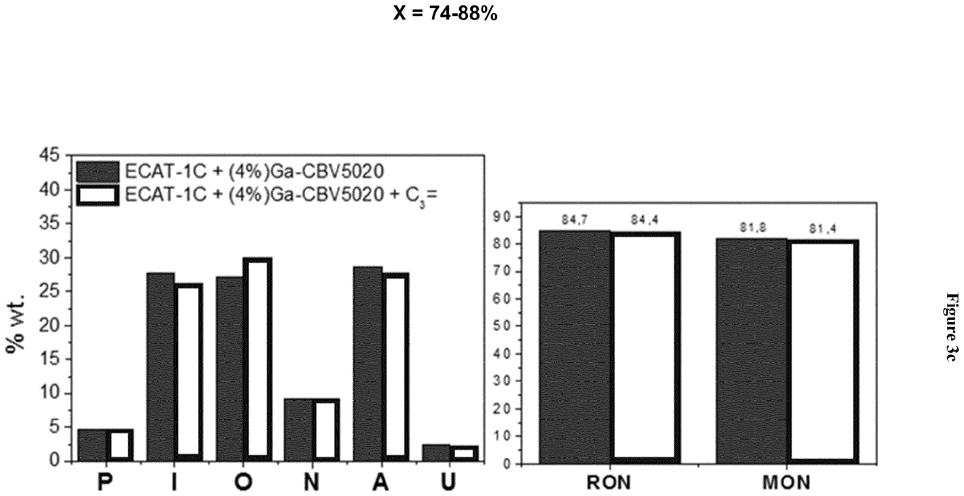

Figure 3 shows the effect of polypropylene (=recycling the gas stream to the reactor) on the quality of the gasoline fraction (P : paraffins, I : iso-paraffins, O : olefins, N : naphthenes, A : aromatics, U : unidentified). Figure 3 additionally shows the RON and MON of the gasoline fractions obtained.

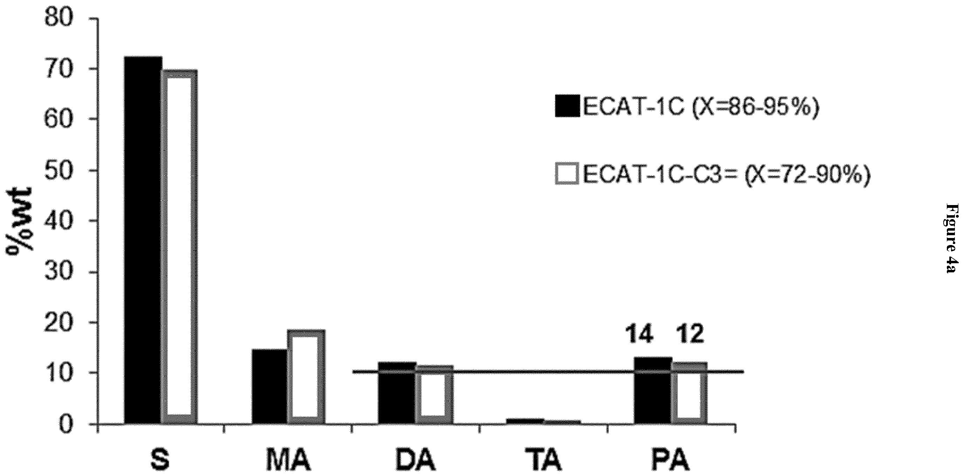

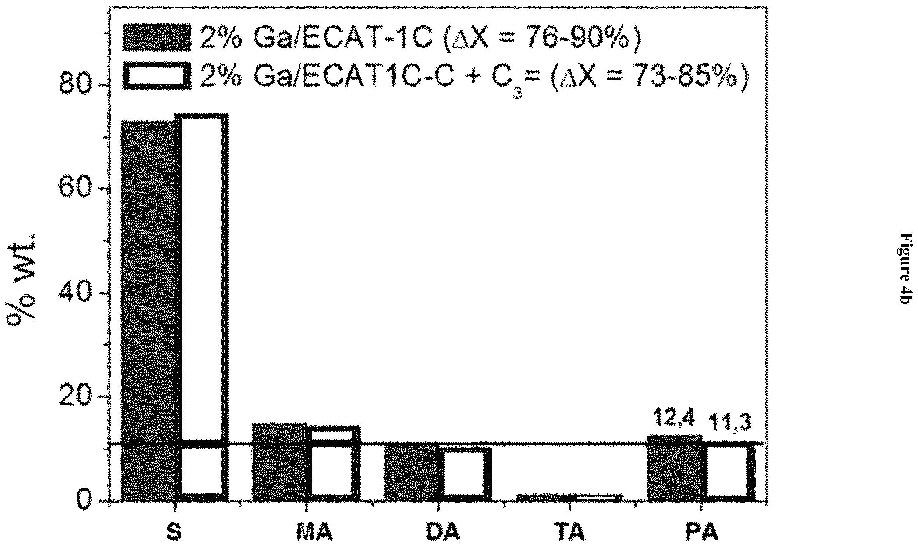

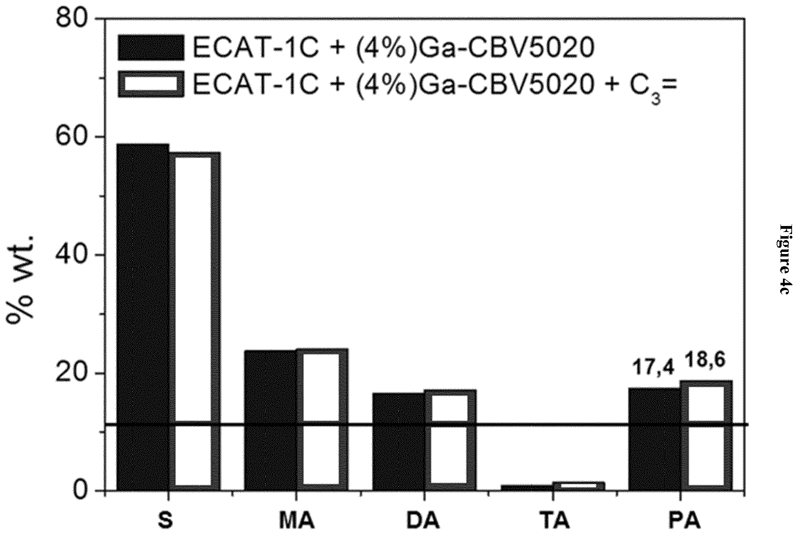

The process of the present invention provides a diesel fraction which comprises a decreased amount of aromatic compounds. This effect is shown in Figure 4, which provides the amounts of saturated (S), monoaromatic (MA), diaromatic (DA), triaromatic (TA) and polyaromatic (PA) compounds in the obtained diesel fractions depending on the absence or presence of the additional gas stream.

Figures 3 and 4 additionally provide the conversion (X) of the mixed waste plastic in each run.

## Claims

1. Process for converting waste plastic, comprising more than 50 % by weight of polystyrene and polyolefin, based on the total weight of the waste plastic, into gases, liquid fuels and waxes by catalytic cracking, the process comprising :
• introducing waste plastic and a catalyst within a reactor;
• allowing at least a portion of the waste plastic to be converted to gases, liquid fuels and waxes within the reactor; and
• removing a product stream containing said gases, liquid fuels and waxes from the reactor,
• **characterized in that** additionally a gas stream comprising propylene is introduced within the reactor and **in that** the catalyst is a zeolite-type catalyst and/or an amorphous-type catalyst.

2. Process according to claim 1, wherein the gas stream contains or consists of the gases obtained from the product stream.

3. Process according to any one of the preceding claims, wherein the catalyst predominantly is a zeolite-type catalyst.

4. Process according to any one of claims 1 and 2, wherein the catalyst consists of zeolite-type catalyst.

5. Process according to claim 3, wherein the catalyst additionally comprises an amorphous-type catalyst.

6. Process according to any one of claims 1, 2 and 5, wherein the amorphous-type catalyst comprises silica, alumina, kaolin, or a mixture thereof.

7. Process according to any of the preceding claims, wherein the catalyst is fresh catalyst, equilibrated catalyst, or a mixture thereof.

8. Process according to any one of the preceding claims, wherein the temperature at which at least part of the waste plastic is converted to gases, liquid fuels and waxes in the reactor is above 350°C, preferably above 410°C, more preferably in the range of above 410°C to 500°C, even more preferably in the range of from 420°C to 450°C.

9. Process according to any one of the preceding claims, which is conducted continuously.

10. Process according to any one of the preceding claims, wherein the waste plastic is selected from post consumer waste plastic, off-spec plastic and industrial scrap plastic.

11. Process according to any one of the preceding claims, wherein the waste plastic is essentially free of thermosetting polymers.

## Patentansprüche

1. Verfahren zur Umwandlung von Kunststoffabfällen, die mehr als 50 Gew.-% Polystyrol und Polyolefin umfassen, bezogen auf das Gesamtgewicht der Kunststoffabfälle, in Gase, flüssige Brennstoffe und Wachse durch katalytisches Kracken, wobei das Verfahren Folgendes umfasst:
• das Einführen von Kunststoffabfällen und einem Katalysator in einen Reaktor;
• das Zulassen einer Umwandlung wenigstens eines Teils der Kunststoffabfälle in Gase, flüssige Brennstoffe und Wachse innerhalb des Reaktors und
• das Entfernen eines die Gase, flüssigen Brennstoffe und Wachse enthaltenden Produktstroms aus dem Reaktor,
• **dadurch gekennzeichnet, dass** darüber hinaus ein Propylen umfassender Gasstrom in den Reaktor eingeführt wird und dass es sich beim Katalysator um einen Katalysator vom Zeolithtyp und/oder einen Katalysator vom amorphen Typ handelt.

2. Verfahren nach Anspruch 1, wobei der Gasstrom die aus dem Produktstrom erhaltenen Gase enthält oder daraus besteht.

3. Verfahren nach einem der vorhergehenden Ansprüche, wobei der Katalysator hauptsächlich ein Katalysator vom Zeolithtyp ist.

4. Verfahren nach einem der Ansprüche 1 und 2, wobei der Katalysator aus einem Katalysator vom Zeolithtyp besteht.

5. Verfahren nach Anspruch 3, wobei der Katalysator darüber hinaus einen Katalysator vom amorphen Typ umfasst.

6. Verfahren nach einem der Ansprüche 1, 2 und 5, wobei der Katalysator vom amorphen Typ Siliciumdioxid, Aluminiumoxid, Kaolin oder eine Mischung davon umfasst.

7. Verfahren nach einem der vorhergehenden Ansprüche, wobei es sich beim Katalysator um frischen Katalysator, äquilibrierten Katalysator oder eine Mischung davon handelt.

8. Verfahren nach einem der vorhergehenden Ansprüche, wobei die Temperatur, bei der wenigstens ein Teil der Kunststoffabfälle im Reaktor in Gase, flüssige Brennstoffe und Wachse umgewandelt wird, mehr als 350 °C, vorzugsweise mehr als 410 °C beträgt, noch mehr bevorzugt im Bereich von mehr als 410 °C bis 500 °C, sogar noch mehr bevorzugt im Bereich von 420 °C bis 450 °C liegt.

9. Verfahren nach einem der vorhergehenden Ansprüche, der kontinuierlich durchgeführt wird.

10. Verfahren nach einem der vorhergehenden Ansprüche, wobei die Kunststoffabfälle aus Postconsumer-Kunststoffabfällen, Off-spec-Kunststoff und industriellen Kunststoffabfällen ausgewählt sind.

11. Verfahren nach einem der vorhergehenden Ansprüche, wobei die Kunststoffabfälle im Wesentlichen frei von wärmehärtbaren Polymeren sind.

## Revendications

1. Procédé de conversion de déchets de matière plastique, comprenant plus de 50 % en poids de polystyrène et de polyoléfine, sur la base du poids total des déchets de matière plastique, en gaz, combustibles liquides et cires par craquage catalytique, le procédé comprenant :
• l'introduction de déchets de matière plastique et d'un catalyseur dans un réacteur ;
• la conversion d'au moins une partie des déchets de matière plastique en gaz, combustibles liquides et cires dans le réacteur ; et
• le retrait d'un flux de produit contenant lesdits gaz, combustibles liquides et cires provenant du réacteur,
• **caractérisé en ce que**, en outre, un flux de gaz comprenant du propylène est introduit dans le réacteur et **en ce que** le catalyseur est un catalyseur de type zéolite et/ou un catalyseur de type amorphe.

2. Procédé selon la revendication 1, dans lequel le flux de gaz contient ou est constitué des gaz obtenus à partir du flux de produit.

3. Procédé selon l'une quelconque des revendications précédentes, dans lequel le catalyseur est principalement un catalyseur de type zéolite.

4. Procédé selon l'une quelconque des revendications 1 et 2, dans lequel le catalyseur est constitué de catalyseur de type zéolite.

5. Procédé selon la revendication 3, dans lequel le catalyseur comprend en outre un catalyseur de type amorphe.

6. Procédé selon l'une quelconque des revendications 1, 2 et 5, dans lequel le catalyseur de type amorphe comprend de la silice, de l'alumine, du kaolin, ou un mélange de ceux-ci.

7. Procédé selon l'une quelconque des revendications précédentes, dans lequel le catalyseur est un catalyseur frais, un catalyseur équilibré, ou un mélange de ceux-ci.

8. Procédé selon l'une quelconque des revendications précédentes, dans lequel la température à laquelle au moins une partie des déchets de matière plastique est convertie en gaz, combustibles liquides et cires dans le réacteur est supérieure à 350 °C, de préférence supérieure à 410 °C, plus préférablement dans la plage de plus de 410 °C à 500 °C, encore plus préférablement dans la plage de 420 °C à 450 °C.

9. Procédé selon l'une quelconque des revendications précédentes, qui est conduit en continu.

10. Procédé selon l'une quelconque des revendications précédentes, dans lequel les déchets de matière plastique sont choisis parmi des déchets de matière plastique post-consommateur, une matière plastique hors spécification et des rejets industriels en matière plastique.

11. Procédé selon l'une quelconque des revendications précédentes, dans lequel les déchets de matière plastique sont pratiquement exempts de polymères thermodurcissables.
